# EUROPÄISCHE PATENTSCHRIFT

(11) **EP 1 855 014 B1**
(45) Veröffentlichungstag und Bekanntmachung des Hinweises auf die Patenterteilung: **25.08.2010**
(21) Anmeldenummer: 06009465.3
(22) Anmeldetag: 08.05.2006
(51) Int. Cl.: F15B 13/04, B30B 15/18, F16K 47/10

(54) **Füllventil**
FIlling valve
Soupape de remplissage

(43) Veröffentlichungstag der Anmeldung: 14.11.2007
(73) Patentinhaber: HAWE Hydraulik SE, 81673 München (DE)
(72) Erfinder: Neumair, Georg, 85402 Thalhausen (DE)
(74) Vertreter: Grünecker, Kinkeldey, Stockmair & Schwanhäusser Anwaltssozietät

(56) Entgegenhaltungen:
- DE-U1- 29 905 322
- GB-A- 505 916
- US-A- 4 428 396

## Beschreibung

Die Erfindung betrifft ein Füllventil gemäß Oberbegriff des Patentanspruchs 1.

Bei dem aus GB-A-505 916 bekannten Füllventil wird der in der Schiebeführung geführte Ventilkörper entgegengesetzt zur Nachsaugrichtung durch die Nachsaugfeder in Abheberichtung vom Sitz beaufschlagt, so dass das Füllventil in drucklosem Zustand in der Offenstellung ist und der in der Presskammer verfahrbare Kolben Druckmittel relativ ungedrosselt durch den Sitz in die Presskammer nachsaugt. Der Ventilkörper ist in einer vom Nachsaugweg in die Presskammer getrennten Hydraulikkammer angeordnet, in der ein Steuerdruck aufbaubar ist, um den Ventilkörper gegen den Sitz anzulegen und nachfolgend das in den Ventilkörper eingegliederte Ventil zu öffnen, so dass aus der Hydraulikkammer über das geöffnete Ventil im Ventilkörper im Presszylinder der erforderliche Arbeitsdruck aufgebaut wird. Das Ventil im Ventilkörper öffnet in einer Strömungsrichtung parallel zur Nachsaugrichtung in dem Presszylinder. Um das Füllventil wieder zu öffnen, wird in der Hydraulikkammer der Druck abgebaut, so dass die Nachsaugfeder den Ventilkörper vom Sitz abhebt und das Druckmittel aus dem Presszylinder in einer freien Strömung zum Tank strömt.

Bei einem aus DE 299 05 322 U bekannten Füllventil, mit hydraulischer Entsperrung wird zum Nachsaugen von Druckmittel der Ventilkörper bis in eine volle Öffnungsstellung vom Sitz abgehoben. Bei Anlage des Ventilkörpers am Sitz im Grundkörper ist eine Strömung durch den Strömungsdurchgang blockiert, selbst wenn in Schließrichtung des Ventilkörpers Druck ansteht.

Solche Füllventile werden in der Praxis z.B. für großvolumige Presszylinder verwendet, deren Differentialkolben beispielsweise durch einen Eilgangzylinder in eine Position für den eigentlichen Pressvorgang verfahren wird. Der Differentialkolben hat eine Kolbenstange mit relativ großem Querschnitt. Das Füllventil ist beispielsweise an die kolbenseitige Kammer eines oder mehrerer Presszylinder angeschlossen, derart, dass das Füllventil beim Verfahren des Differentialkolbens mit Vergrößerung der kolbenseitigen Kammer öffnet und eine relativ große Menge Druckmittel pro Zeiteinheit nachströmen lässt. Gleichzeitig wird, da sich die kolbenstangenseitige Kammer verkleinert, aus der kolbenstangenseitigen Kammer Druckmittel in die kolbenseitige Kammer transferiert. Verkleinert hingegen der Differentialkolben die kolbenseitige Kammer, wobei sich gleichzeitig die kolbenstangenseitige Kammer vergrößert, dann muss Druckmittel in die kolbenstangenseitige Kammer transferiert werden, beispielsweise über ein auf ein Druckgefälle ansprechendes Ventil. Hierbei ist es wichtig, dass Druckmitteltransfers ohne nennenswerten Unterdruck erfolgen, weil zu starker Unterdruck im Druckmittel (Hydrauliköl) gelöste Luft ähnlich wie beim Öffnen einer Mineralwasserflasche als Luftblasen freisetzt, was im Druckbetrieb außerordentlich nachteilig ist. Deshalb wird z.B. in der kolbenseitigen Kammer ein Vorspanndruck, für das den Transfer steuernde Ventil aufgebaut, das beim Transfer das Entstehen schädlichen Unterdrucks vermeidet. Der Vorspanndruck darf eine vorbestimmte Höhe nicht überschreiten, um den Eilganghub nicht zu behindern. Diese Vorspannfunktion könnte durch ein getrennt vom Füllventil angeordnetes Vorspannventil bewirkt werden, das jedoch zusätzlich Ventilkomponenten, Bauraum und Strömungswege bedingen würde. Dies ist auch deshalb unzweckmäßig, weil meist mehrere Füllventile eingesetzt werden und dadurch der Aufwand für getrennte Vorspannventile entsprechend ansteigt. Demzufolge besteht u.a. für solche Anforderungen Bedarf für ein Füllventil, das die Nachsaugfunktion und in der der Nachsaugrichtung entgegengesetzten Strömungsrichtung eine Vorspannfunktion leistet.

Der Erfindung liegt die Aufgabe zugrunde, ein herstellungstechnisch einfaches Füllventil der eingangs genannten Art, jedoch mit erweitertem Einsatzzweck anzugeben.

Die gestellte Aufgabe wird mit den Merkmalen des Patentanspruchs 1 gelöst.

Da das Vorspannventil bei am Sitz anliegendem Ventilkörper entgegengesetzt zur Nachsaugrichtung öffnet, erzeugt das an sich geschlossene Füllventil den Vorspanndruck für die Vorspannfunktion. Das Füllventil leistet diese Vorspannfunktion ohne zusätzliche Strömungswege. Die Vorspannfeder kann mit wünschenswert großer Federlänge und damit günstig flacher Federrate zwischen dem Ventilkörper und dem Stößel angeordnet sein. Besonders zweckmäßig ist die Ventilscheibe des Vorspannventils mit einem Schaft verbunden, vorzugsweise einstückig, der in der Schiebeführung des Grundkörpers geführt wird, so dass das Vorspannventil über den Schaft und den Stößel den Ventilkörper des Füllventils führt. Dies bietet herstellungstechnische Vorteile.

Das Vorspannventil ist auf im Wesentlichen die gleiche Menge pro Zeiteinheit ausgelegt wie das Füllventil selbst, wobei das Vorspannventil den Strömungsdurchgang des Füllventils im Grundkörper nutzt. Selbst wenn der bei offenem Vorspannventil und absperrendem Ventilkörper benutzte Strömungsweg kleiner ist als der Strömungsweg bei in Offenstellung befindlichem Ventilkörper, wird im Wesentlichen die gleiche Menge pro Zeiteinheit strömen, da der Vorspanndruck höher sein kann als der Nachsaugdruck. Zu diesem Zweck ist der Öffnungs-Ansprechdruck des Vorspannventils ein Vielfaches des Öffnungs-Ansprechdrucks des Füllventils. Beispielsweise beträgt der Öffnungs-Ansprechdruck des Vorspannventils etwa 3,0 Bar, während der Öffnungs-Ansprechdruck des Füllventils nur etwa 0,1 bis etwa 0,4 Bar beträgt. Das Vorspannventil begrenzt den Vorspanndruck auf einen vorbestimmten Druckwert (Druckbegrenzungsfunktion des Vorspannventils).

Bei einer Ausführungsform ist die Vorspannfeder auf einem die Führung des Stößels bildenden Ansatz des Ventilkörpers angeordnet. Der Stößel trägt am der Ventilscheibe abgewandten Ende eine Federstützhülse oder ist dort als Federstützkörper ausgebildet. Auf diese Weise wird auch für eine lange Vorspannfeder eine günstige Führung gegen Ausknicken erzielt.

Um die Bauhöhe des Füllventils trotz der Vorspannfunktion in axialer Richtung so kompakt wie möglich zu gestalten, ist es zweckmäßig, die Ventilscheibe in der Schließstellung des Vorspannventils in einer Vertiefung des Ventilkörpers des Füllventils unterzubringen. Dadurch wird bei geschlossenem Vorspannventil die Strömung durch das offene Füllventil vom Vorspannventil nicht gestört. Hingegen ist, zweckmäßig, der Strömungsdurchgang im Grundkörper so ausgebildet, dass ein Freiraum für die Ventilscheibe des Vorspannventils vorliegt, wenn der Ventilkörper am Sitz anliegt, damit das Vorspannventil ohne Kollision mit dem Grundkörper weit öffnen kann.

Da die Öffnungsbewegung des Vorspannventils relativ rasch erfolgt, ist es zweckmäßig, wenn zwischen dem Ansatz und der Federstützhülse bzw. dem Federstützkörper in der Offenstellung des Vorspannventils ineinandergreifende Dämpfelemente einer hydraulischen Dämpfvorrichtung für das Hubende des Öffnungshubs des Vorspannventils vorgesehen sind. Die hydraulische Dämpfvorrichtung dämpft einen harten Schlag ab, wodurch eine erwünschte Geräuschminderung erzielt wird. Zum Dämpfen wird hierbei das Hydraulikmedium benutzt, das durch das Füllventil bzw. das Vorspannventil strömt.

Bei einer zweckmäßigem Ausführungsform sind die Dämpfelemente wenigstens ein Ringkragen und eine Ringnut, wobei die Ringnut den Ringkragen in der Offenstellung des Vorspannventils mit einer, vorzugsweise losen, Gleitpassung in axialer Richtung aufnimmt. Durch das Eintauchen des Ringkragens in die Ringnut wird dort eingeschlossenes Hydraulikmedium durch relativ enge Spalte verdrängt. Die Gleitpassung kann hierbei lose sein, um einen vorbestimmten Dämpfungsverlauf zu erzielen. Die hydraulische Dämpfvorrichtung erbringt die Dämpffunktion ohne fremde Elemente.

Da auch die Öffnungsbewegung des Ventilkörpers sehr rasch erfolgt, ist es zweckmäßig, auch zwischen dem Grundkörper und einer Federstützhülse oder einem Federstützkörper der Nachsaugfeder eine hydraulische Dämpfvorrichtung vorzusehen, die aus in der Offenstellung des Ventilkörpers ineinandergreifenden Dämpfelementen besteht und erst beim Öffnungshubende wirksam wird. Auch diese Dämpfelemente können ein Ringkragen und eine Ringnut sein, wobei die Ringnut den Ringkragen in der Offenstellung des Ventilkörpers in axialer Richtung mit einer Gleitpassung aufnimmt, zweckmäßig mit einer losen Gleitpassung. Am Hubende des Öffnungshubs erfolgt eine Dämpfung durch Verdrängen des Hydraulikmediums durch relativ enge Spalte.

Eine Ausführungsform des Erfindungsgegenstandes wird anhand der Zeichnung erläutert. Es zeigen:
- Fig. 1: einen Axialschnitt eines Füllventils in absperrender Stellung,
- Fig. 2: einen Axialschnitt des Füllventils in einer offenen Nachsaugstellung, und
- Fig. 3: einen Axialschnitt des Füllventils in einer Vorspannstellung.

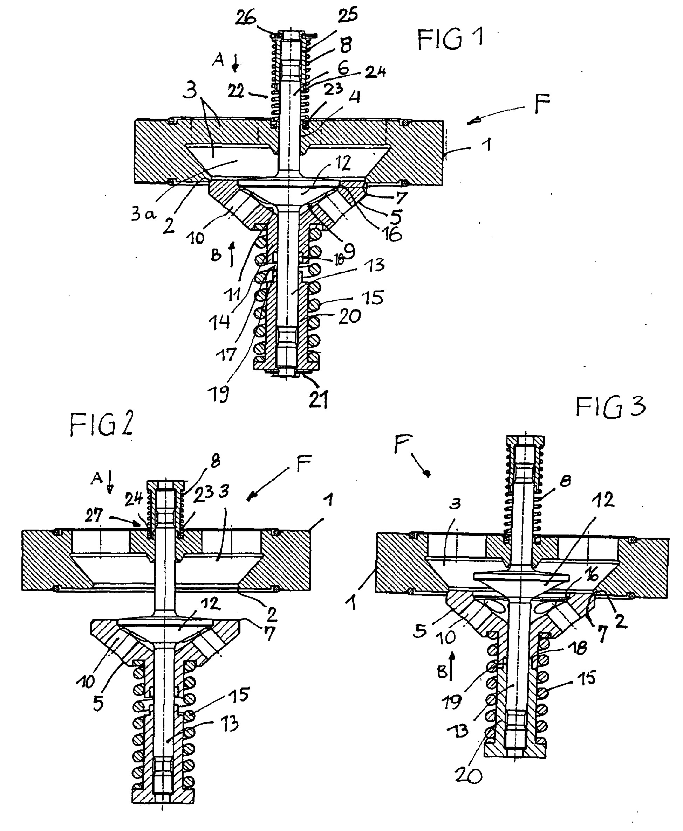

Ein in den Fig. 1 bis 3 jeweils in einem Axialschnitt gezeigtes Füllventil F, insbesondere für Presszylinder, weist einen scheibenförmigen Grundkörper 1 mit einem unterseitigen, kreisrunden Sitz 2 und einen Strömungsdurchgang auf, wobei der Strömungsdurchgang durch eine an den Sitz 2 angrenzende, sich nach oben erweiternde Kammer 3a und um das Zentrum verteilte Durchlässe 3 gebildet ist. Im Zentrum des Grundkörpers 1 ist eine Schiebeführung 4 (Bohrung) geformt, in der ein Schaft 6 eines im Grundzug konischen Ventilkörpers 5 verschiebbar geführt ist. Der Ventilkörper 5 besitzt am äußeren Rand einen Sitzbereich 7. Der Schaft 6 wird durch eine Nachsaugfeder 8 in Richtung zum Sitz 2 beaufschlagt. Die Nachsaugfeder 8 ist auf dem Schaft 6 angeordnet, stützt sich mit einem Ende im Grundkörper 1 ab, und sitzt am anderen Ende auf einer auf den Schaft 6 aufgesetzten Federstützhülse 25. Die Federstützhülse, 25 ist beispielsweise durch ein Federpaket 6 am Schaftende gesichert. Anstelle der Federstützhülse 25 könnte das freie Ende des Schaftes 6 als Federstützkörper ausgebildet sein (nicht gezeigt).

Im Ventilkörper 5 sind innerhalb des Sitzbereiches 7 mehrere Durchgänge 10 geformt, die zu einer trichterartigen Vertiefung 11 in der Oberseite des Ventilkörpers 5 führen.

In den Ventilkörper 5 ist ein Vorspannventil 9 eingegliedert. Das Vorspannventil weist eine konische Ventilscheibe 12 auf, die mit einem Dichtsitz 16 im Ventilkörper 5 zusammenwirkt, und, vorzugsweise, einstückig mit dem Schaft 6 ausgebildet ist. An der anderen Seite der Ventilscheibe 12 ist ein Stößel 13 geformt, der in einer Innenbohrung eines Ansatzes 14 des Ventilkörpers 5 geführt wird. Zwischen den Stößel 13 und dem Ventilkörper 5 ist eine Vorspannfeder 15 eingesetzt, die den Ansatz 14 außen umgibt und auch auf einer Federstützhülse 20 sitzt, die am freien Ende des Stößels 13 angebracht und beispielsweise durch ein Federpaket 21 gesichert ist. Anstelle der Federstützhülse 20 könnte das freie Ende des Stößels 13 als Federstützkörper (nicht gezeigt) ausgebildet sein.

Der Schaft 6, die Ventilscheibe 12, der Stößel 13 und der Ventilkörper 5 sind koaxial im Grundkörper 1 des Füllventils F montiert. Der Ventilkörper 5 wird über den Ansatz 14 auf dem Stößel 13 und den Schaft 4 in der Schiebeführung 4 geführt.

Das in Fig. 1 gezeigte Füllventil ist ausgelegt zum Öffnen jeweils wahlweise in einer Nachsaugrichtung (Pfeil A) und einer Vorspannrichtung (Pfeil B). In Fig. 1 sperrt das Füllventil F, d.h., der Ventilkörper 5 liegt am Sitz 2 an und sperrt in Nachsaugrichtung A, während das Vorspannventil 9 mit seiner Ventilscheibe 12 am Dichtsitz 16 absperrt und in Vorspannrichtung B blockiert.

Das Füllventil hat beispielsweise folgende Abmessungen: Der Grundkörper 1 hat einen Außendurchmesser von etwa 250 mm. Der Ventilkörper 5 hat einen Außendurchmesser von etwa 130 mm. Die Ventilscheibe 12 hat einen Außendurchmesser von etwa 85 mm. Der Öffnungshub des Ventilkörpers 5 beträgt etwa 30 mm, während der Öffnungshub des Vorspannventils 9 in etwa 16 mm beträgt.

Die Vorspannfeder 15 ist wesentlich stärker als die Nachsaugfeder 8, derart, dass beispielsweise der Öffnungs-Ansprechdruck für den Ventilkörper 5 in Nachsaugrichtung A bei etwa 0,1 bis 0,3 Bar liegt, während der Öffnungs-Ansprechdruck des Vorspannventils 9 in Vorspannrichtung B bei etwa 3,0 Bar liegt.

Zur Vermeidung eines lauten Geräusches am Ende des Öffnungshubs des Vorspannventils 9 ist zwischen dem Ansatz 14 und der Federstützhülse 20eine rein hydraulische Dämpfvorrichtung 17 vorgesehen. Zu diesem Zweck ist beispielsweise am freien Ende der Federstützhülse 20 wenigstens ein Ringkragen 19 angeformt, der auf eine am freien Ende des Ansatzes 14 geformte Ringnut 18 ausgerichtet ist und in diese eintauchen kann. Dabei wird in der Ringnut 18 enthaltenes Druckmittel verdrängt und so am Hubende gedämpft. Beispielsweise liegt zwischen dem Ringkragen 19 und der Ringnut 18 eine lose Gleitpassung vor. Das Federpaket 21 nimmt ebenfalls Energie auf.

Um auch eine Geräuschentwicklung am Ende des Öffnungshubes des Ventilkörpers 5 zu dämpfen, ist zwischen der Federstützhülse 25 und dem Grundkörper 1 eine rein hydraulische Dämpfvorrichtung 27 vorgesehen. Konkret ist am unteren Ende der Stützhülse 25 wenigstens ein Ringkragen 24 angeformt, der in eine Ringnut 23 in der Oberseite des Grundkörpers eintaucht und darin enthaltenes Druckmittel über relativ enge Spalte verdrängt.

Fig. 2 zeigt das Füllventil F beim Nachsaugen. Der Ventilkörper 5 wird durch den Nachsaugdruck vom Sitz 2 abgehoben, bis die Dämpfvorrichtung 27 wirksam geworden ist. Die Ventilscheibe 12 ist in der Vertiefung 11 des Ventilkörpers 5 geborgen und wird von der Vorspannfeder 15 in Anlage am Dichtsitz 16 gehalten. Das Druckmittel strömt in Nachsaugrichtung A durch das geöffnete Füllventil F.

In Fig. 3 ist das Füllventil F beim Vorspanntakt gezeigt. Der Ventilkörper 5 wird von der Nachsaugfeder 8 und der Vorspannfeder 15 am Sitz 2 gehalten. Die Ventilscheibe 12 ist vom Dichtsitz 16 abgehoben, bis die hydraulische Dämpfeinrichtung 17 wirksam geworden ist. Die Vorspannfeder 15 ist komprimiert. Druckmittel strömt in Vorspannrichtung B durch die Durchgänge 10 im Ventilkörper 5, vorbei an der abgehobenen Ventilscheibe 12, und weiter durch den Strömungsdurchgang 3 im Grundkörper 1. Sobald der Vorspanndruck, wie durch die Vorspannfeder 15 eingestellt, abfällt oder gänzlich verschwindet, wird die Ventilscheibe 12 durch die Vorspannfeder 15 wieder gegen den Dichtsitz 16 gebracht, so dass das Füllventil F wieder die in Fig. 1 gezeigte absperrende Stellung einnimmt.

Die Zusammenarbeit zwischen dem Ventilkörper 5 und dem Sitz 2 im Grundkörper 1 und auch die Zusammenarbeit zwischen der Ventilscheibe 12 und dem Dichtsitz 16 im Ventilkörper 5 erfolgt infolge entsprechender Bearbeitung so, dass in der jeweiligen Schließstellung Dichtigkeit gegeben ist und möglichst keine Leckage auftritt.

## Patentansprüche

1. Füllventil (F), insbesondere für Presszylinder, mit einem einen Strömungsdurchgang (3) und einen Sitz (2) aufweisenden Grundkörper (1), in dem in einer Schiebeführung (4) ein Ventilkörper (5) relativ zum Sitz (2) verschiebbar und entgegengesetzt zu einer vom Strömungsdurchgang (3) durch den Sitz (2) orientierten Nachsaugrichtung (A) durch eine Nachsaugfeder (8) beaufschlagt ist, wobei in den Ventilkörper (5) ein Ventil eingegliedert ist, das eine Ventilscheibe (12) mit einem im Ventilkörper (5) geführten Stößel (13) und eine Vorspannfeder (15) zwischen dem Ventilkörper (5) und dem Stößel (13) aufweist, und im Ventilkörper (5) für die Ventilscheibe (12) ein Dichtsitz (16) vorgesehen ist, zu dem im Ventilkörper (5) ein innerhalb des Sitzbereiches des Ventilkörpers (5) ausgebildeter Durchgang (10) führt, **dadurch gekennzeichnet, dass** der Ventilkörper (5) durch die Nachsaugfeder (8) in Richtung zum Sitz (2) beaufschlagt ist, dass das in den Ventilkörper (5) eingegliederte Ventil ein Vorspannventil (9) ist, das bei unter Beaufschlagen durch die Nachsaugfeder (8) auf dem Sitz (2) anliegendem Ventilkörper (5) in einer der Nachsaugrichtung (A) entgegengesetzten Strömungsrichtung (B) anspricht und öffnet, und dass mit der Ventilscheibe (12) ein Schaft (6) verbunden ist, der den Ventilkörper (5) in der Schiebeführung (4) führt.

2. Füllventil nach Anspruch 1, **dadurch gekennzeichnet, dass** der Öffnungs-Ansprechdruck des Vorspannventils (9) ein Vielfaches des Öffnungs-Ansprechdrucks des Füllventils ist, vorzugsweise der Öffnungs-Ansprechdruck des Vorspannventils (9) etwa 3,0 Bar und der Öffnungs-Ansprechdruck des Füllventils (F) etwa 0,1 bis 0,4 Bar betragen.

3. Füllventil nach Anspruch 1, **dadurch gekennzeichnet, dass** die Vorspannfeder (15) auf einem die Führung des Stößels (13) bildenden Ansatz (14) des Ventilkörpers (5) angeordnet ist, und dass der Stößel (13) am der Ventilscheibe (12) abgewandten Ende eine Federstützhülse (20) trägt oder als Federstützkörper ausgebildet ist.

4. Füllventil nach Anspruch 1, **dadurch gekennzeichnet, dass** die Ventilscheibe (12) in der Schließstellung des Vorspannventils (9) in einer Vertiefung (11) des Ventilkörpers (5) geborgen ist, und dass der Strömungsdurchgang (3) eine zum Ventilkörper (5) offene Kammer (3a) für die Offenstellung der Ventilscheibe (12) umfasst.

5. Füllventil nach Anspruch 3, **dadurch gekennzeichnet, dass** zwischen dem Ansatz (14) und der Federstützhülse (20) bzw. dem Federstützkörper in der Offenstellung des Vorspannventils (9) ineinandergreifende Dämpfelemente einer hydraulischen Dämpfvorrichtung (17) für das Öffnungshubende des Vorspannventils (9) vorgesehen sind.

6. Füllventil nach Anspruch 5, **dadurch gekennzeichnet, dass** die Dämpfelemente wenigstens ein Ringkragen (19) und eine Ringnut (18) sind, wobei die Ringnut (18) den Ringkragen (19) in der Offenstellung des Vorspannventils (9) mit einer, vorzugsweise losen, Gleitpassung aufnimmt

7. Füllventil nach Anspruch 1, **dadurch gekennzeichnet, dass** die Nachsaugfeder (8) auf einer am freien Ende des Schafts (6) angeordneten Federstützhülse (25) oder einem am Schaft (6) ausgebildeten Federstützkörper angeordnet ist und sich am Grundkörper (1) abstützt, dass zwischen der Federstützhülse (25) oder dem Federstützkörper und dem Grundkörper (1) in der Offenstellung des Ventilkörpers (5) ineinandergreifende Dämpfelemente einer hydraulischen Dämpfvorrichtung (27) für das Öffnungshubende des Ventilkörpers (5) vorgesehen sind, und dass die Dämpfelemente wenigstens ein Ringkragen (24) und eine Ringnut (23) sind, wobei die Ringnut (23) den Ringkragen (24) in der Offenstellung des Ventilkörpers (5) mit einer, vorzugsweise losen, Gleitpassung aufnimmt.

## Claims

1. Filling valve (F), in particular for pressing cylinders, comprising a base body (1) containing a flow passage (3) and a seat (2), in which base body (1) within a sliding guidance (4), a valve body (5) is movable relative to the seat (2), the valve body (5) being actuated by a suction spring (8) opposite to a suction direction (A) oriented from the flow passage (3) through the seat (2), a valve being incorporated into the valve body (5), which valve comprises a valve disk (12) and a push rod (13) guided in the valve body (5) and a preloading spring (15) between the valve body (5) and the push rod (13), and a sealing seat (16) being provided in the valve body (5) for the valve disk (12), to which sealing seat (16) a passage (10) extends formed in the valve body (5) within the seating region of the valve body (5), **characterized in that** the valve body (5) is actuated by the suction spring (8) in a direction towards the seat (2), that the valve incorporated into the valve body (5) is a preloading valve (9), which responds and opens a flow direction opposite to the suction direction (A) when the valve body (5) is seated on the seat (2) upon actuation by the suction spring (8), and that a stem (6) is connected with the valve disk (12), which stem is guiding the valve body (5) in the sliding guidance (4).

2. Filling valve as in claim 1, **characterized in that** the opening response pressure of the preloading valve (9) is a multiple of the opening response pressure of the filling valve, the opening response pressure of the preloading valve (9) amounting to about 3,0 Bar and the opening response pressure of the filling valve (F) amounting to about 0,1 to 0,4 Bar.

3. Filling valve as in claim 1, **characterized in that** the preloading spring (15) is arranged on a projection (14) of the valve body (5), which projection forms a guide for the push rod (13), and that an end of the push rod (13) remote from the valve disk (12) either carries a spring support sleeve (20) or is formed as a spring support body.

4. Filling valve as in claim 1, **characterized in that** the valve disk (12) is accommodated in a recess (11) of the valve body (5) in the closed position of the preloading valve (9), and that the flow passage (3) includes a chamber (3a), which is open towards the valve body (5), for accommodating the valve disk (12) in the opened position.

5. Filling valve as in claim 3, **characterized in that** damping elements of a hydraulic damping device for terminating the opening stroke of the preloading valve (9), which damping elements inter-engage in the opened position of the preloading valve (9), are provided between the projection (14) and the spring support sleeve (20) or the spring support body.

6. Filling valve as in claim 5, **characterized in that** the damping elements comprise at least one angular collar (19) and an angular groove (18), the angular groove (18) accommodating the angular collar (19) in the opened position of the preloading valve (9) with a sliding fit, preferably a loose sliding fit.

7. Filling valve as in claim 1, **characterized in that** the suction spring (8) is provided on a spring support sleeve (25) located at the free end of the stem (6) or at a spring support body formed at the stem (6), that the suction spring (8) is supported at the base body (1), that damping elements of a hydraulic damping device (27) for terminating the opening stroke of the valve body (5) are provided between the spring support sleeve (25) or the spring support body and the base body (1), and that the damping elements comprise at least one angular collar (24) and an angular groove (23), the angular groove (23) accommodating the angular collar (24) in the opened position of the valve body (5) with a sliding fit, preferably a loose sliding fit.

## Revendications

1. Soupape de remplissage (F), en particulier pour des cylindres de pression, avec un corps de base (1) qui présente un passage d'écoulement (3) et un siège (2) et dans lequel est mobile, dans une glissière (4), un corps de soupape (5) par rapport au siège (2) et est sollicité, dans la direction contraire à une direction de post-aspiration (A), orientée du passage d'écoulement (3) au travers du siège (2), par un ressort de post-aspiration (8), une soupape, qui présente un disque de soupape (12) avec un poussoir (13), guidé dans le corps de soupape (5), et un ressort de précontrainte (15) entre le corps de soupape (5) et le poussoir (13), étant incorporée dans le corps de soupape (5), et un siège d'étanchéité (16) étant prévu dans le corps de soupape (5) pour le disque de soupape (12), siège en direction duquel mène un passage (10) réalisé dans le corps de soupape (5) à l'intérieur de la zone de siège du corps de soupape (5), **caractérisée en ce que** le corps de soupape (5) est sollicité en direction du siège (2) par le ressort de post-aspiration (8), que la soupape incorporée dans le corps de soupape (5) est une soupape de précontrainte (9), qui répond et ouvre dans une direction d'écoulement (B), contraire à la direction de post-aspiration (A), lorsque le corps de soupape (5) s'applique sur le siège (2) sous l'effet d'une sollicitation par le ressort de post-aspiration (8), et qu'une tige (6), qui guide le corps de soupape (5) dans la glissière (4), est assemblée avec le disque de soupape (12).

2. Soupape de remplissage suivant la revendication 1, **caractérisée en ce que** la pression de réponse d'ouverture de la soupape de précontrainte (9) est un multiple de la pression de réponse d'ouverture de la soupape de remplissage, la pression de réponse d'ouverture de la soupape de précontrainte (9) est de préférence d'environ 3,0 bars et la pression de réponse d'ouverture de la soupape de remplissage (F) est de préférence d'environ 0,1 à 0,4 bar.

3. Soupape de remplissage suivant la revendication 1, **caractérisée en ce que** le ressort de précontrainte (15) est disposé sur un épaulement (14) du corps de soupape (5), formant le guidage du poussoir (13), et que le poussoir (13) supporte, sur l'extrémité opposée au disque de soupape (12), une douille d'appui de ressort (20) ou est réalisé sous forme de corps d'appui de ressort.

4. Soupape de remplissage suivant la revendication 1, **caractérisée en ce que** le disque de soupape (12), dans la position de fermeture de la soupape de précontrainte (9), est logé dans un creux (11) du corps de soupape (5), et que le passage d'écoulement (3) comprend un compartiment (3a), ouvert en direction du corps de soupape (5), pour la position d'ouverture du disque de soupape (12).

5. Soupape de remplissage suivant la revendication 3, **caractérisée en ce que** des éléments d'amortissement d'un dispositif d'amortissement hydraulique (17), qui s'engagent les uns dans les autres entre l'épaulement (14) et la douille d'appui de ressort (20) ou le corps d'appui de ressort dans la position d'ouverture de la soupape de précontrainte (9), sont prévus pour la fin de course d'ouverture de la soupape de précontrainte (9).

6. Soupape de remplissage suivant la revendication 5, **caractérisée en ce que** les éléments d'amortissement sont au moins un collet annulaire (19) et une gorge annulaire (18), la gorge annulaire (18) recevant le collet annulaire (19) dans la position d'ouverture de la soupape de précontrainte (9) avec un ajustement glissant, de préférence lâche.

7. Soupape de remplissage suivant la revendication 1, **caractérisée en ce que** le ressort de post-aspiration (8) est disposé sur une douille d'appui de ressort (25), montée sur l'extrémité libre de la tige (6), ou sur un corps d'appui de ressort réalisé sur la tige (6), et s'appuie sur le corps de base (1), que des éléments d'amortissement d'un dispositif d'amortissement hydraulique (27), qui s'engagent les uns dans les autres entre la douille d'appui de ressort (25) ou le corps d'appui de ressort et le corps de base (1) dans la position d'ouverture du corps de soupape (5), sont prévus pour la fin de course d'ouverture du corps de soupape (5), et que les éléments d'amortissement sont au moins un collet annulaire (24) et une gorge annulaire (23), la gorge annulaire (23) recevant le collet annulaire (24) dans la position d'ouverture du corps de soupape (5) avec un ajustement glissant, de préférence lâche.
